# EUROPÄISCHE PATENTANMELDUNG

(11) **EP 3 379 480 A1**
(43) Veröffentlichungstag der Anmeldung: **26.09.2018**
(21) Anmeldenummer: 18162522.9
(22) Anmeldetag: 19.03.2018
(51) Int. Cl.: G06Q 20/32, G06Q 20/34, G06Q 20/38

(54) **VERFAHREN UND ANORDNUNG ZUR ÜBERMITTLUNG VON TRANSAKTIONSDATEN UNTER NUTZUNG EINES ÖFFENTLICHEN DATENNETZES**

(30) Priorität: 23.03.2017 DE 102017106295; 29.09.2017 DE 102017122799
(71) Anmelder: Rubean AG, 81379 München (DE)
(72) Erfinder: Geupel, Hermann, 81925 München (DE)
(74) Vertreter: Heinze, Ekkehard

(57) **Zusammenfassung**

Verfahren zur Übermittlung von Transaktionsdaten unter Nutzung eines Mobilfunknetzes oder WLAN, mit den Schritten:
a) Bereitstellung einer Transaktionsdatei auf einem Nutzerendgerät des Mobilfunknetzes oder WLAN,
b) Anfordern eines Autorisierungsdatensatzes, insbesondere einer PIN, einer als SmartCard konfigurierten und mit Mitteln zur drahtlosen Nahbereichs-Datenübertragung ausgerüsteten Debit- oder Kreditkarte bei einem Onlinebanking-Server,
c) Übermittlung des Autorisierungsdatensatzes vom Onlinebanking-Server an das Nutzerendgerät, Empfang am Nutzerendgerät und
d1) Übermittlung des Autorisierungsdatensatzes vom Nutzerendgerät an die mit diesem drahtlos verbundene Smartcard per Nahbereichs-Datenübertragung oder d2) interne Übergabe des Autorisierungsdatensatzes an die SmartCard-Komponente im Nutzerendgerät,
e) Prüfung des Autorisierungsdatensatzes durch einen Prozessor der SmartCard oder SmartCard-Komponente aufgrund von dort gespeicherten Vergleichsdaten und, bei Korrektheit, Ausgabe einer Korrektheit-Bestätigungsnachricht an das Nutzerendgerät bzw. intern im Nutzerendgerät,
und weiteren.

## Beschreibung

Die Erfindung betrifft ein Verfahren und eine Anordnung zur Übermittlung von Transaktionsdaten unter Nutzung eines öffentlichen Datennetzes. Im Kern betrifft sie ein Verfahren und System zur Autorisierung von Onlinezahlungen.

In Onlineshops stehen heute oft mehrere Verfahren zur Auswahl, um sich im Rahmen der Autorisierung einer Onlinezahlung zu authentifizieren:
- mit Vorkasse, Sofortüberweisung oder PIN und TAN basierte OnlineBanking-Verfahren, bei denen der Kunde seine Onlinebanking PIN parat haben und die TAN handhaben muss
- mit ApplePay und Selfie-Pay (http://www.welt.de/finanzen/verbraucher/article152595657/Mastercard-Kunden-koennen-bald-per-Selfie-bezahlen.html biometrische Verfahren, die zu fälschlichen Abweisungen führen können
- mit Paypal ein technisch nicht so sicheres Verfahren, mit der ausschließlichen Prüfung eines Passwortes.

In der unveröffentlichten europäischen Patentanmeldung Nr. 16204208.9 schlägt die Anmelderin ein für den Benutzer einfaches und doch hochgradig sicheres Verfahren und System der genannten Art vor, das mit hochwertigen mobilen Endgeräten zuverlässig funktioniert.

Hierbei wird einem geeigneten Smartphone die Funktion eines Kassenterminals für Debit- und Kreditkarten zugeordnet, die zu einer drahtlosen Nahbereichs-Datenübertragung (NFC) fähig sind. Im Hinblick auf die Erfüllung der für Bezahlvorgänge gängigen Sicherheitsanforderungen sind die herstellerseitig implementierten Sicherheitsmerkmale des jeweiligen Nutzerendgerätes von Bedeutung.

Die vorliegende Erfindung stellt sich die Aufgabe, ein weiteres benutzerfreundliches und zugleich sicheres Verfahren und System zur Autorisierung von Onlinezahlungen aufzuzeigen, das mit mittel- und niederpreisigen Endgeräten implementiert werden kann und somit für breitere Nutzerkreise zugänglich wird.

Diese Aufgabe wird in ihrem Verfahrensaspekt durch ein Verfahren mit den Merkmalen des Anspruchs 1 und in ihrem Vorrichtungsaspekt durch eine Anordnung mit den Merkmalen des Anspruchs 10, gelöst. Zweckmäßige Fortbildungen des Erfindungsgedankens sind Gegenstand der jeweiligen abhängigen Ansprüche.

Die vorliegende Erfindung schafft damit ein sicheres und nutzerfreundliches Verfahren und System zur Autorisierung einer Online-Transaktion mittels NFCfähiger Smartcard und einfachem Smartphone.

Die gestellte Aufgabe löst die Erfindung insbesondere dadurch, dass die Karten-PIN, die zu einer EMV konformen Aktivierung der Signaturfunktion auf der Debit- oder Kreditkarte (Karte) benötigt wird, nicht über eine Nutzerschnittstelle des Nutzerendgerätes (Smartphone) eingegeben wird, was Schutzmaßnahmen gegen ein PIN-Phishing erfordern würde, sondern automatisch von einem Server aus Ende-zu-Ende (vom Server zur Karte) gesichert über das Nutzerendgerät in die Karte geschickt wird.

Aus Gründen des Datenschutzes wird der Server, der die Karten-PIN erfindungsgemäß zumindest zeitweise im Klartext vorhalten muss, bei der kartenausgebenden Bank stehen müssen. Wenn die NFC fähige Smartcard und das Smartphone aus dem genannten Grund mit der kartenausgebenden Bank kommunizieren müssen, bietet sich an, dass eine Onlinezahlung per Überweisung, zum Beispiel gemäß des FinTS- (ehemals HBCI genannt) oder MasterCard CAP-Standards, und nicht gemäß einem Zahlungsverkehrsstandard wie zum Beispiel ec-Cash ausgeführt wird.

Im Onlinebanking eingesetzt, ersetzt das erfindungsgemäße Verfahren die TAN (international: One Time Code) durch eine Signatur auf der Karte, die bisher nur über spezielle, kontaktbehaftete Kartenlesegeräte (Secoder) und nicht über ein handelsübliches Smartphone angestoßen werden konnte.

Alternativ zu einer Karten-PIN als einem Autorisierungsdatensatz, den der Server zur Aktivierung der Signaturfunktion an die Karte übermittelt, kann der Autorisierungsdatensatz auch aus anderen Nutzdaten (englisch: payload) bestehen, denen ein Nachweis zugeordnet ist oder wird, dass sie von einer autorisierten Quelle stammen.

Der Server kann die Nutzdaten zu diesem Zweck entweder mit einem symmetrischen Schlüssel verschlüsseln, der auch in der Karte gespeichert ist, oder mit einem asymmetrischen public key signieren, dessen komplementärer public key in der Karte gespeichert ist.

Der Autorisierungsdatensatz kann beispielsweise aus der Transaktionsdatei bestehen, die die Karte Itetztlich signieren soll.

Das Nutzerendgerät kann den Autorisierungsdatensatz dem Server zusammen mit vorher erfassten Nutzerauthentifizierungsdaten, zum Beispiel einer zwischen Nutzerendgerät und Server vereinbarten PIN oder dem Ergebnis eines Fingerabdruckvergleichs, geschützt durch einen beidseitig authentifizierten TLS Kanal übermitteln. Nachdem der Server die Nutzerauthentifizierungsdaten mit positivem Ergebnis geprüft hat, übermittelt er den Autorisierungsdatensatz, zum Beispiel die Transaktionsdatei, signiert bzw. Ende-zu-Ende verschlüsselt über das Nutzerendgerät an die Karte.Das erfindungsgemäße Verfahren und System mittels der Anbindung NFC fähiger Debit- und Kreditkarten an ein NFC fähiges Endgerät (Smartphone) des Kunden erzielt die folgenden Vorteile:
- Es realisiert ein einfaches Verfahren zur Aktivierung einer Signaturfunktion auf Bankkarten, die Geldüberweisungen autorisieren. Der Kunde muss zur Freigabe von Geldüberweisungen nur seine NFC fähige Bankkarte an das Smartphone halten. Im Rahmen der neuen Europäischen Zahlungsverkehrsrichtlinie PSD2 repräsentiert dieser Nachweis des Besitzes der eigenen Bankkarte einen ersten von zwei nötigen Authentifizierungsfaktoren. Als zweiter Faktor bietet sich ggfs. ein biometrisches Authentifizierungsmerkmal (z.B. "Fingerabdruck" oder Retinastruktur) an.
- Es ist sicher und kosteneffizient: Durch einen gesicherten Mobile App Installationsprozess und die geschützte Bereitstellung der PIN oder eines anderen Autorisierungsdatensatzes kann der Kunde mit seinem eigenen, nicht unbedingt hochwertigen Smartphone seine NFC fähige Bankkarte als Sicherheitsfaktor in Onlineprozesse wie Electronic Banking oder Online / Mobile Shopping mit einbeziehen.
- Es schließt weitgehend ein Phishing der PIN bei Nutzerendgeräten aus, die nicht über ein sog. Trusted User Interface verfügen, und unterstützt im Prinzip alle Geräte, die eine Mobile App auf eine eingebaute NFC-Schnittstelle zugreifen lassen.

In einem möglichen Anwendungsfall gibt die Hausbank des Benutzers eine NFC-fähige Karte an diesen aus, erweitert eine bereits bestehende Mobile Banking App um die erfindungsgemäßen Funktionen der Mobile App und betreibt einen Onlinebanking-Server. In diesem Fall sind bereits alle drei wesentlichen Kommunikationselemente (Karte, App und Serverdatensatz) logisch miteinander verbunden, so dass der Benutzer sie nicht mehr manuell zuordnen muss.

Die Hausbank könnte ihrem Kunden bei einem Upgrade der Mobile Banking App einen gemäß des White Box Cryptography Prinzips geschützten Private Key und Public Key, zur vertrauenswürdigen Kommunikation mit dem Onlinebanking-Server und eine NFC und EMV kompatible Kommunikationsschnittstelle zur NFC Karte liefern.

Über diese Anordnung könnte gemäß des deutschen FinTS Standards oder anderer Electronic Banking Standards eine passende Signaturfunktion auf der NFC-fähigen Karte genutzt werden, mit der der Benutzer dem Server gegenüber eine Geldüberweisung bestätigt.

Als zweiter Authentifizierungsfaktor könnte die Eingabe eines statischen Passwortes oder vorzugsweise das Auflegen eines Fingers auf den Fingerabdrucksensor des Smartphones des Benutzers oder andere biometrische Authentifizierungsmethoden dienen.

Die Freigabe einer Überweisung kann aus Sicht des Benutzers entsprechend folgendermaßen ablaufen:
1. Im Falle von Online Banking über einen Desktop werden die Transaktionsdaten mittels Scannen eines QR Codes oder mittels Google oder Apple Push Notification auf das Smartphone geladen. Im Falle von Mobile Banking entfällt dieser Schritt.
2. Prüfen der Überweisungsdaten auf dem Bildschirm des Smartphones.
3. Halten der NFC Karte an die NFC-Schnittstelle des Smartphones und
4. Drücken des Fingers auf den Fingerabdrucksensor auf dem Smartphone.

Die Schritte 3. und 4. können in ihrer Reihenfolge vertauscht sein, insbesondere dann, wenn die Transaktionsdatei, bevor sie auf der Karte signiert wird, zusammen mit den Nutzerauthentifizierungsdaten an den Server übermittelt wird, damit aus der Transaktionsdatei ein Autorisierungsdatensatz gebildet werden kann, der die Karte zur Signatur der Transaktionsdatei aktiviert.

Die Nutzerauthentifizierungsdaten drücken den Willen des Benutzers aus, die Transaktion vornehmen zu wollen (engisch: act of will).

Die Bereitstellung der Transaktionsdatei im Schritt a) des vorgeschlagenen Verfahrens kann auf unterschiedliche Weise erfolgen. In einer ersten, gewissermaßen "direkten" Variante, weist dieser Schritt die folgenden Teilschritte auf:
a0') Übermittlung initialer Transaktionsdaten von einem Webserver über das Datennetz und Mobilfunknetz oder WLAN an das Nutzerendgerät und Erzeugung einer initialen Transaktionsdatei in dem Nutzerendgerät,
a1') Verarbeitung der initialen Transaktionsdatei auf dem Nutzerendgerät zur Extraktion mindestens eines Teils der Transaktionsdaten.

In einer anderen Variante, bei der der Nutzer neben seinem Smartphone ein weiteres Gerät (etwa einen Laptop oder ein Tablet) benutzt, umfasst der Schritt a) beispielhaft die folgenden Teilschritte:
a0) Übermittlung initialer Transaktionsdaten von einem Webserver über das Datennetz an ein an das Datennetz angeschlossenes Anzeigegerät und
a01) lokale optische und/oder akustische Anzeige der initialen Transaktionsdaten an diesem, insbesondere optisch auf einer angezeigten Anbieter-Website als Barcode oder QR-Code oder
a02) Weiterleitung der initialen Transaktionsdaten über einen Google oder Apple Push Notification Dienst an das Nutzerendgerät,
a11) Aufnahme der Anzeige und Erzeugung einer initialen Transaktionsdatei in dem Nutzerendgerät oder
a12) Aufnahme der Anzeige und Erzeugung einer initialen Transaktionsdatei in einem Aufnahmegerät und anschließendes Übertragen derselben an das Nutzerendgerät über drahtlose Nahbereichs-Datenübertragung,
a2) Verarbeitung der initialen Transaktionsdatei auf dem Nutzerendgerät zur Extraktion mindestens eines Teils der Transaktionsdaten.

In einer aus derzeitiger Sicht bevorzugten Ausführung autorisiert sich eine im Nutzerendgerät installierte Mobile App im Schritt b) gegenüber dem Onlinebanking-Server des Autorisierungsdatendienstes mittels eines Private Keys, der insbesondere gemäß des White-Box Cryptography-Prinzips zerstückelt und über den Programmcode der Mobile App verteilt gespeichert ist. Dies reduziert die Erfolgsaussichten von Phishing-Attacken auf nahezu Null.

Als weiter bevorzugt erscheint es, dass die Mobile App bei der Installation auf dem Nutzerendgerät eine NFC-Karte der drahtlosen Nahbereichs-Datenübertragung eindeutig zugeordnet und die Zuordnung im Onlinebanking-Server des Autorisierungsdatendienstes gespeichert wird. Dies erhöht weiter die Sicherheit des Gesamtablaufes, insofern, als ein betrügerischer Eingriff am Verbindungspunkt zwischen NFC-Karte und Mobile App praktisch ausgeschlossen wird.

Mit der gleichen Zielstellung der weiteren Erhöhung der Sicherheit ist in einer weiteren Ausführung vorgesehen, dass sich die Mobile App gegenüber dem Onlinebanking-Server durch ein Public Key Verfahren authentifiziert und/oder die Mobile App und der Onlinebanking-Server verschlüsselt miteinander kommunizieren. Gemäß einer weiteren Ausführung der Erfindung wird zusätzlich ein Schritt einer biometrischen Authentifizierung des Nutzers am Nutzerendgerät, insbesondere mittels eines Fingerabdrucksensors, ausgeführt. Diese Ausführung setzt zwar das Vorhandensein eines Sensors für biometrische Nutzermerkmale am Nutzerendgerät voraus, bietet jedoch einen dann einfach realisierbaren weiteren Sicherheitsgewinn.

Für den wesentlichen Datenaustausch zwischen Nutzerendgerät und Smartcard ist eine Ausführung vorteilhaft, in der das Nutzerendgerät und die Smartcard über das Near Field Communication, NFC, Protokoll und den EMV-Standard für chipbasierte Zahlungskarten bidirektional kommunizieren.

Weiterhin ist in der Praxis vorgesehen, dass im Schritt c der Autorisierungsdatensatz die verschlüsselte Transaktionsdatei oder eine PIN der Kreditkarte oder Debitkarte, wie zum Beispiel Girocard (Bankkarte), aufweist. Alternativ ist grundsätzlich auch ein Datensatz physiologischer Nutzerdaten (Fingerabdruck, Retinabild, Stimmprofil o.ä.) einsetzbar, dies birgt jedoch latent ein höheres Abweisungs-Risiko für die angestrebte Transaktion.

Vorrichtungs- bzw. Systemaspekte der vorliegenden Erfindung ergeben sich weitgehend aus den vorstehend erläuterten Verfahrensaspekten und werden insoweit hier nicht wiederholt. Es wird darauf hingewiesen, dass auch hier Konfigurationen eingeschlossen sind, bei der eine vom Nutzerendgerät separate Smartcard oder eine in das Nutzerendgerät eingeschlossene Smartcard-Komponente zum Einsatz kommen.

Es wird aber hier darauf hingewiesen, dass in einer zweckmäßigen Ausführung das Nutzerendgerät einen Geräteschlüssel zur Authentifizierung mindestens gegenüber einem App-Ladesystem und gegenüber dem Onlinebanking-Server des Autorisierungsdatendienstes, insbesondere einen Private Key im Sinne einer Public Key Infrastructure, PKI, aufweist.

Eine weitere vorteilhafte Ausführung des Nutzerendgerätes weist das Nutzerendgerät einen Biometrie-Sensor zur Erfassung biometrischer Daten eines Nutzers, insbesondere einen Fingerabdrucksensor, auf, und die Mobile App zur Verarbeitung eines biometrischen Datensatzes vom Biometrie-Sensor ausgebildet ist.

Vorteile und Zweckmäßigkeiten der Erfindung ergeben sich im Übrigen aus der nachfolgenden Beschreibung eines Ausführungsbeispiels und von Ausführungsaspekten der Erfindung anhand der Figuren. Von diesen zeigen:
Fig. 1 eine schematische Darstellung einer erfindungsgemäßen Anordnung,
Fig. 2 eine weitere schematische Darstellung der erfindungsgemäßen Anordnung und
Fig. 3 ein Ablaufschema eines weiteren beispielhaften erfindungsgemäßen Verfahrens.

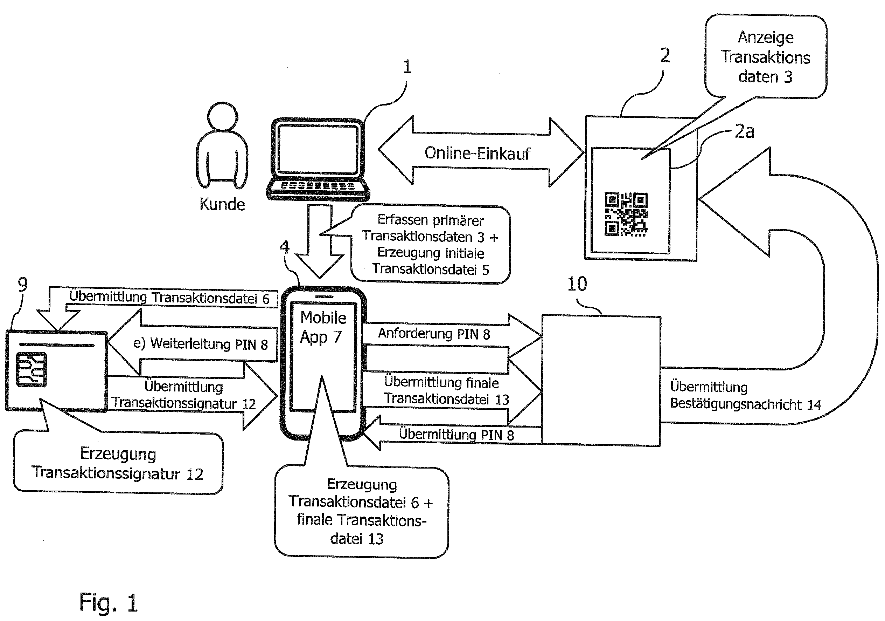

Die Erfindung löst die Aufgabe durch ein Verfahren zur Autorisierung und Durchführung einer Transaktion, das gemäß Fig. 1 in einer vorteilhaften Ausführung und vereinfachten Formulierung folgende Schritte aufweist:
- Darstellung von initialen Transaktionsdaten 3 auf einer Website 2, gesteuert durch ein Plug-in Softwaremodul 2a, auf dem Anzeigeschirm eines von einem Kunden bei einem Online-Einkauf genutzten Computers 1;
- Automatisches Erfassen der Transaktionsdaten 3 zur Erzeugung einer initialen Transaktionsdatei 5 durch ein Smartphone 4 des Benutzers und Anzeige der initialen Transaktionsdatei 5 auf demselben;
- Verarbeitung der initialen Transaktionsdatei 5 auf dem Smartphone 4 zur Extraktion mindestens eines Teils der Transaktionsdaten und Erzeugung einer (neuen) Transaktionsdatei 6 mittels einer im Smartphone 4 installierten Mobile App 7,
- Anfordern einer PIN 8 einer als SmartCard 9 konfigurierten und mit NFC-Datenübertragungsmitteln ausgerüsteten Debit- oder Kreditkarte 9 bei einem Onlinebanking-Server (trusted server) 10 mittels des Smartphones 4,
- Übermittlung der PIN 8 vom Onlinebanking-Server 10 an das Smartphone 4;
- Übermittlung der PIN 8 vom mit einer NFC-Karte ausgerüsteten Smartphone 4 an die mit diesem drahtlos verbundene Smartcard 9 per NFC;
- Übermittlung der Transaktionsdatei 6 vom Smartphone 4 an die mit diesem drahtlos verbundene Smartcard 9 per NFC;
- Erzeugung einer digitalen Signatur (Transaktionssignatur) 12 zur Transaktionsdatei 6 auf der Smartcard 9 und Ausgabe der Transaktionssignatur an das Smartphone 4,
- Erzeugung einer finalen Transaktionsdatei 13, die die Transaktionssignatur 12 mit umfasst, in der Mobile App 7,
- Übermittlung der finalen Transaktionsdatei 13 über das Mobilfunknetz an den Onlinebanking-Server 10,
- Erzeugung einer Transaktions-Bestätigungsnachricht 14 nach Verarbeitung der finalen Transaktionsdatei 13 zur Ausführung der Transaktion im Onlinebanking-Server 10,
- Abholen der Transaktions-Bestätigungsnachricht 14 durch eine Anbieter-Software;
- Empfang der Transaktions-Bestätigungsnachricht 14 an einer (nicht gezeigten) Anbieter-Empfangseinrichtung und optische und/oder akustische Anzeige der Nachricht auf der Anbieter-Website 2.

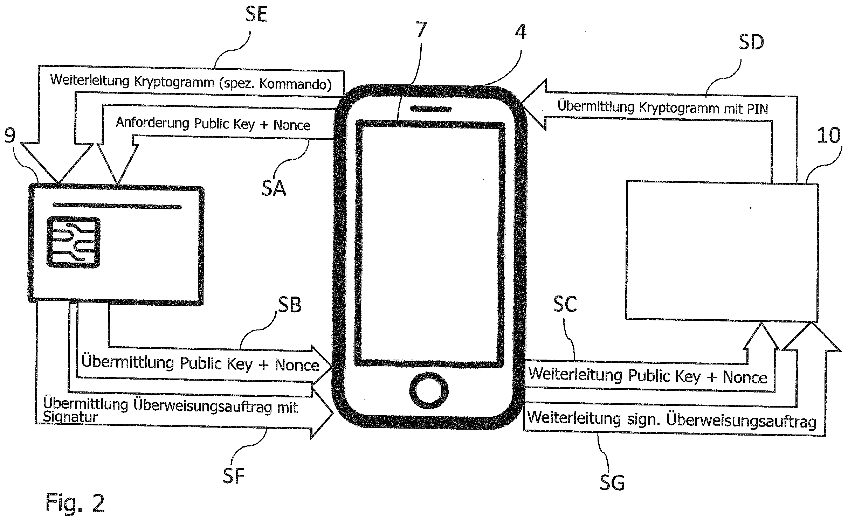

Wie in Fig. 2 skizzenhaft dargestellt, kann die PIN Prüfung ohne Mitwirkung des Benutzers in einer ersten Variante wie folgt ablaufen:
- Die Mobile App 7 fordert von der Bankkarte 9 einen public key zur Verschlüsselung der PIN, die der FinTS-Anwendung auf der Karte zugeordnet ist, PuK_{PIN} und eine einmalig nutzbare Zufallszahl, im allgemeinen Nonce (*Number used once*) genannt, an. Die Nonce dient dem Zweck, Replay-Attacken zu verhindern, indem ein PIN-Kryptogramm immer nur einmal gültig ist, wobei auch eine Ergänzung bzw. Ersetzung durch einen Timestamp denkbar wäre. Die FinTS-Anwendung auf der Karte 9 ist so gestaltet, dass sie die generierte Zufallszahl bis zur anschließenden PIN-Prüfung als gültig speichert (Schritt SA). Die Bankkarte liefert dies (Schritt SB).
- Die Mobile App 7 leitet Puk_{PIN} und Nonce an den Onlinebanking-Server 10 weiter, über eine hinsichtlich Vertraulichkeit und Integrität abgesicherte Verbindung des Smartphones 4 (Schritt SC).
- Der Onlinebanking-Server 10 erstellt ein Datenpaket aus Klartext-PIN, Nonce und gegebenenfalls weiteren Zufallszahlen als Padding zum Erreichen der Schlüssellänge des PuK_{PIN}. Dieses wird mit dem PuK_{PIN} verschlüsselt und als Kryptogramm K_{PIN} an die Mobile App 7 gesendet (Schritt SD).
- Die Mobile App 7 sendet KPIN an die Karte 9 - mittels eines Kommandos, das ähnlich dem EMV-Kommando PIN_VERIFY() die Karte veranlasst, sowohl die Korrektheit der verschlüsselten PIN, als auch die der Nonce im Kryptogrammm K_{PIN} zu prüfen (Schritt SE).
- Die Mobile App 7 lässt den Überweisungsauftrag von der Bankkarte 9 signieren und die Bankkarte 9 übermittelt ihr den Überweisungsauftrag mit Signatur (Schritt SF). Die Mobile App schickt dem Onlinebanking-Server 10 den signierten Überweisungsauftrag zu (Schritt SG).

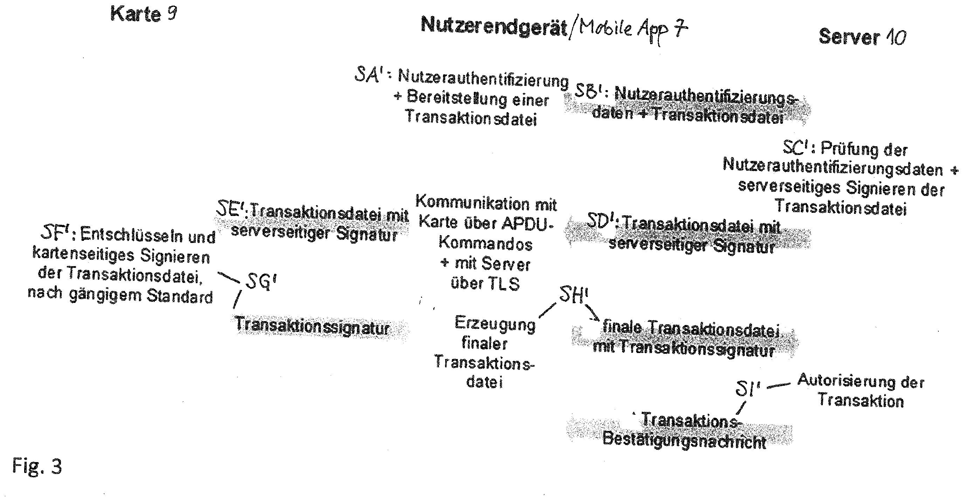

Fig. 3 zeigt eine mögliche Ausgestaltung des erfindungsgemäßen Verfahrens für den Fall, dass der Autorisierungsdatensatz nicht aus der Karten-PIN, sondern aus der Transaktionsdatei besteht. Basis ist die in Fig. 1 gezeigte Anordnung.
- Die Mobile App 7 zeigt dem Benutzer die Transaktionsdaten an, fordert diesen auf, die Transaktion im Rahmen eines Fingerabdruckes oder einer PIN Eingabe zu bestätigen (englisch: act of will) und erzeugt dann aus den Transaktionsdaten die Transaktionsdatei 6, welche später von der Karte 9 signiert werden soll (Schritt SA').
- Die Mobile App 7 baut mit dem Onlinebanking-Server 10 einen beidseitig authentifizierten, verschlüsselten TLS Kommunikationskanal auf und schickt in diesem die Nutzerauthentifizierungsdaten an den Onlinebanking-Server 10, das heißt das Ergebnis des smartphoneinternen Fingerabdruckvergleiches oder die eingegebene PIN, welche einmalig im Onlinebanking-Server 10 gespeichert wurde (Schritt SB').
- Der Onlinebanking-Server 10 prüft die Nutzerauthentifizierungsdaten und verschlüsselt im Falle eines positiven Ergebnisses die Transaktionsdatei mit einem symmetrischen Schlüssel, der auch auf der Karte 9 gespeichert ist, oder signiert die Transaktionsdatei mit einem private key, dessen korrespondierender public key auf der Karte 9 gespeichert ist (Schritt SC').
- Der Onlinebanking-Server 10 schickt die verschlüsselte bzw. signierte Transaktionsdatei an die Mobile App 7 (Schritt SD').
- Ohne die Transaktionsdatei zu entschlüsseln oder zu bearbeiten, packt die Mobile App 7 sie in ein APDU Kommando und schickt diese per NFC an die Karte 9 (Schritt SE').
- Die Karte 9 empfängt das APDU Kommando und entschlüsselt die Transaktionsdatei, wenn der Onlinebanking-Server 10 symmetrische Schlüssel verwendet, bzw. prüft die Signatur zur Transaktionsdatei, wenn der Onlinebanking-Server 10 asymmetrische Schlüssel verwendet (Schritt SF').
- Die Karte 9 erzeugt gemäß gängigen Standards eine digitale Signatur bzw. ein Kryptogramm, z.B. Message Authentication Code (MAC), zur Transaktionsdatei und übermittelt diese bzw. dieses im APDU Format an die Mobile App 7 (Schritt SG').
- In der Mobile App 7 wird schließlich eine finale Transaktionsdatei, welche die Transaktionssignatur mit umfasst, erzeugt und an den Onlinebanking-Server 10 übermittelt (Schritt SH'). Nach einer Autorisierung der Transaktion übermittelt der Onlinebanking-Server 10 in Schritt j) eine entsprechende Bestätigung an die Mobile App 7 (Schritt SI').

Wenn das erfindungsgemäße Verfahren in einen Mobile Commerce Prozess eingebettet wird, entfällt die Verwendung eines Computers 1 und der erfindungsgemäße Schritt a), in welchem die Transaktionsdaten 3 auf der Webseite 2 grafisch, zum Beispiel als QR-Code, dargestellt werden. Der Schritt b) ändert sich in diesem Fall derart, dass die Transaktionsdaten 3 nicht mehr vom Smartphone 4 eingescannt werden müssen, sondern im Rahmen einer Datenkommunikation von dem Webserver an einen im Smartphone befindlichen Browser übergeben werden.

Wenn der Online Händler das erfindungsgemäße Bezahlverfahren nicht augenfällig für alle Käufer auswählbar machen will, weil nur ein Teil der Käufer mit erfindungsgemäßen Smartphones 4 und Smartcards 9 ausgestattet sind, kann die Mobile Commerce Variante des erfindungsgemäßen Bezahlverfahrens auch in ein bereits etabliertes Bezahlsystem integriert werden.

In diesem Fall kann die Eingangswebseite des etablierten Bezahlsystems ein JavaScript umfassen, das auf den Smartphone Browser geladen wird und dort den User Agent String erfasst und, falls dieser auf einen Android basierten Chrome Browser hindeutet, den Browser auf eine neue Webseite leitet, auf der der Nutzer den weiteren Verlauf mit einem Menütastendruck bestätigen muss. Anschließend gibt die neue Webseite eine derart gestaltete URL an den Chrome Browser zurück, dass dieser entweder per Android Intent Call zum Öffnen einer auf dem Smartphone installierten, erfindungsgemäßen Mobile App 7 veranlasst, oder, falls dies nicht möglich ist, auf die Eingangsseite des etablierten Bezahlsystems weitergeleitet wird.

Das etablierte Bezahlverfahren wird ebenfalls dann angewendet, wenn das JavaScript der Eingangswebseite aufgrund des ermittelten User Agent Strings zu dem Schluss kommt, dass der verbundene Browser kein Android basierter Chrome Browser ist.

Die Ausführung der Erfindung ist nicht auf diese Beispiele beschränkt, sondern ebenso in einer Vielzahl von Abwandlungen möglich, die im Rahmen fachgemäßen Handelns liegen.

## Patentansprüche

1. Verfahren zur Übermittlung von Transaktionsdaten unter Nutzung eines Mobilfunknetzes oder WLAN, mit den Schritten:
a) Bereitstellung einer Transaktionsdatei auf einem Nutzerendgerät des Mobilfunknetzes oder WLAN,
b) Anfordern eines Autorisierungsdatensatzes, insbesondere einer PIN, einer als SmartCard konfigurierten und mit Mitteln zur drahtlosen Nahbereichs-Datenübertragung ausgerüsteten Debit- oder Kreditkarte bei einem Onlinebanking-Server,
c) Übermittlung des Autorisierungsdatensatzes vom Onlinebanking-Server an das Nutzerendgerät, Empfang am Nutzerendgerät und
d1) Übermittlung des Autorisierungsdatensatzes vom Nutzerendgerät an die mit diesem drahtlos verbundene Smartcard per Nahbereichs-Datenübertragung oder
d2) interne Übergabe des Autorisierungsdatensatzes an die SmartCard-Komponente im Nutzerendgerät,
e) Prüfung des Autorisierungsdatensatzes durch einen Prozessor der SmartCard oder SmartCard-Komponente aufgrund von dort gespeicherten Vergleichsdaten und, bei Korrektheit, Ausgabe einer Korrektheit-Bestätigungsnachricht an das Nutzerendgerät bzw. intern im Nutzerendgerät,
f1) Übermittlung der Transaktionsdatei vom Nutzerendgerät an die mit diesem drahtlos verbundene Smartcard per Nahbereichs-Datenübertragung oder
f2) interne Übergabe der Transaktionsdatei an die SmartCard-Komponente im Nutzerendgerät,
g) Erzeugung einer digitalen Signatur zur Transaktionsdatei auf der SmartCard oder SmartCard-Komponente und Ausgabe der Transaktionssignatur an das Nutzerendgerät bzw. intern im Nutzerendgerät,
h) Erzeugung einer finalen Transaktionsdatei, die die Transaktionssignatur mit umfasst, im Nutzerendgerät,
i) Übermittlung der finalen Transaktionsdatei vom Nutzerendgerät über das Mobilfunknetz oder WLAN an den Onlinebanking-Server,
j) Abholen oder Empfang einer Transaktions-Bestätigungsnachricht vom Onlinebanking-Server am Nutzerendgerät.

2. Verfahren zur Übermittlung von Transaktionsdaten unter Nutzung eines Mobilfunknetzes oder WLAN, mit den Schritten:
a) Bereitstellung einer Transaktionsdatei auf einem Nutzerendgerät des Mobilfunknetzes oder WLAN,
b1') Übermittlung eines Autorisierungsdatensatzes, insbesondere der Transaktionsdatei an einen Onlinebanking-Server,
b2') Signatur des Autorisierungsdatensatzes mit einem private key, der zu einem public key passt, welcher auf einer mit dem Nutzerendgerät drahtlos verbundenen SmartCard oder einer in das Nutzerendgerät eingefügten SmartCard-Komponente gespeichert ist,
c) Übermittlung des Autorisierungsdatensatzes vom Onlinebanking-Server an das Nutzerendgerät, Empfang am Nutzerendgerät und
d1) Übermittlung des Autorisierungsdatensatzes vom Nutzerendgerät an die mit diesem drahtlos verbundene Smartcard per Nahbereichs-Datenübertragung oder
d2) interne Übergabe des Autorisierungsdatensatzes an die SmartCard-Komponente im Nutzerendgerät,
e') Prüfung der Signatur zum Autorisierungsdatensatz, insbesondere der Transaktionsdatei, durch einen Prozessor der SmartCard oder SmartCard-Komponente mittels eines dort gespeicherten Schlüssels,
g) Erzeugung einer digitalen Signatur, möglicherweise auch in Form eines Kryptogramms, zur Transaktionsdatei auf der SmartCard oder SmartCard-Komponente und Ausgabe der Transaktionssignatur an das Nutzerendgerät bzw. intern im Nutzerendgerät,
h) Erzeugung einer finalen Transaktionsdatei, die die Transaktionssignatur mit umfasst, im Nutzerendgerät,
i) Übermittlung der finalen Transaktionsdatei vom Nutzerendgerät über das Mobilfunknetz oder WLAN an den Onlinebanking-Server,
j) Abholen oder Empfang einer Transaktions-Bestätigungsnachricht vom Onlinebanking-Server am Nutzerendgerät.

3. Verfahren nach Anspruch 2, wobei folgende Schritte geändert werden:
Schritt b2') dahingehend zu einem Schritt b2"), dass der Server den Autorisierungsdatensatz nicht signiert, sondern mit einem symmetrischen Schlüssel verschlüsselt, welcher auch auf der SmartCard oder SmartCard-Komponente gespeichert ist,
Schritt e') dahingehend zu einem Schritt e"), dass die SmartCard oder SmartCard-Komponente keine Signatur zum Autorisierungsdatensatz prüft, sondern den Autorisierungsdatensatz mit einem passenden symmetrischen Schlüssel entschlüsselt.

4. Verfahren nach einem der vorangehenden Ansprüche , wobei der Autorisierungsdatensatz in den Schritten c) und d1) bzw. d2) Ende-zu-Ende verschlüsselt vom Onlinebanking-Server an die Smartcard übermittelt wird und das Nutzerendgerät nur als Übertragungsstation genutzt wird, das den Autorisierungssatz weder entschlüsselt noch bearbeitet.

5. Verfahren nach einem der vorangehenden Ansprüche, wobei der Schritt a) folgende Teilschritte aufweist:
a0) Übermittlung initialer Transaktionsdaten von einem Webserver über das Datennetz an ein an das Datennetz angeschlossenes Anzeigegerät und
a01) lokale optische und/oder akustische Anzeige der initialen Transaktionsdaten an diesem, insbesondere optisch auf einer angezeigten Anbieter-Website als Barcode oder QR-Code oder
a02) Weiterleitung der initialen Transaktionsdaten über einen Google oder Apple Push Notification Dienst an das Nutzerendgerät,
a11) Aufnahme der Anzeige und Erzeugung einer initialen Transaktionsdatei in dem Nutzerendgerät oder
a12) Aufnahme der Anzeige und Erzeugung einer initialen Transaktionsdatei in einem Aufnahmegerät und anschließendes Übertragen derselben an das Nutzerendgerät über drahtlose Nahbereichs-Datenübertragung,
a2) Verarbeitung der initialen Transaktionsdatei auf dem Nutzerendgerät zur Extraktion mindestens eines Teils der Transaktionsdaten,

6. Verfahren nach einem der vorangehenden Ansprüche, wobei der Schritt a) die folgenden Teilschritte aufweist:
a0') Übermittlung initialer Transaktionsdaten von einem Webserver über das Datennetz und Mobilfunknetz oder WLAN an das Nutzerendgerät und Erzeugung einer initialen Transaktionsdatei in dem Nutzerendgerät,
a1') Verarbeitung der initialen Transaktionsdatei auf dem Nutzerendgerät zur Extraktion mindestens eines Teils der Transaktionsdaten.

7. Verfahren nach einem der vorangehenden Ansprüche, wobei eine im Nutzerendgerät installierte Mobile App sich im Schritt b) oder b1') gegenüber dem Onlinebanking-Server mittels eines Private Keys authentisiert, der insbesondere gemäß des White-Box Cryptography-Prinzips zerstückelt und über den Programmcode der Mobile App verteilt gespeichert ist.

8. Verfahren nach Anspruch 7, wobei die Mobile App bei der Installation auf dem Nutzerendgerät einer NFC-Karte der drahtlosen Nahbereichs-Datenübertragung eindeutig zugeordnet und die Zuordnung im Onlinebanking-Server gespeichert wird.

9. Verfahren nach Anspruch 7 oder 8, wobei sich die Mobile App gegenüber dem Onlinebanking-Server durch ein Public Key Verfahren authentifiziert und/oder die Mobile App und der Transaktions-Server verschlüsselt miteinander kommunizieren.

10. Verfahren nach einem der vorangehenden Ansprüche, wobei zusätzlich ein Schritt einer biometrischen Authentifizierung des Nutzers am Nutzerendgerät, insbesondere mittels eines Fingerabdrucksensors, ausgeführt wird.

11. Verfahren nach Anspruch 2 und 10, wobei folgende Schritte erweitert werden:
Schritt a) dahingehend zu einem Schritt a'), dass vor der Bereitstellung einer Transaktionsdatei Benutzerauthentifizierungsdaten erhoben werden, insbesondere ein Fingerabdruckvergleichsergebnis oder eine vom Benutzer einzugebende, im Onlinebanking-Server gespeicherte PIN,
Schritt b1') dahingehend zu einem Schritt b1"), dass zusätzlich zum Autorisierungsdatensatz, insbesondere der Transaktionsdatei, auch die erhobenen Nutzerauthentifizierungsdaten an den Onlinebanking-Server übermittelt werden, und Schritt b2') bzw. b2") dahingehend zu einem Schritt b2''') bzw. b2""), dass vor der Signatur bzw. Verschlüsselung der Transaktionsdatei die Nutzerauthentifizierungsdaten überprüft werden.

12. Verfahren nach einem der vorangehenden Ansprüche, wobei die Nahbereichs-Datenübertragung gemäß dem Near Field Communication, NFC, Protokoll und dem EMV-Standard für chipbasierte Zahlungskarten abläuft.

13. Anordnung zur Durchführung des Verfahrens nach einem der vorangehenden Ansprüche, wobei die Anordnung aufweist:
- ein an ein Mobilfunknetz oder WLAN angeschlossenes Nutzerendgerät, mit Mitteln zur Bereitstellung einer Transaktionsdatei und Mitteln zur drahtlosen Nahbereichs-Datenübertragung,
- eine als Smartcard konfigurierte Debit- oder Kreditkarte mit Mitteln zur drahtlosen Nahbereichs-Datenübertragung und einem Prozessor zur Prüfung empfangener Daten, die einen Autorisierungsdatensatz der Smartcard umfassen, aufgrund von in der Smartcard gespeicherten Vergleichsdaten und, bei Korrektheit, Ausgabe einer Korrektheit-Bestätigungsnachricht und Erzeugung und Ausgabe einer Signatur zur Transaktionsdatei,
- einen Onlinebanking-Server mit Empfangsmitteln zum Empfang der Anforderung eines Autorisierungsdatensatzes über das Mobilfunknetz oder WLAN und ein Datennetz und Sendemitteln zur verschlüsselten Übersendung des angeforderten Autorisierungsdatensatzes an das Nutzerendgerät,
- eine auf dem Nutzerendgerät installierte Mobile App zur Steuerung der Erzeugung und Verarbeitung der Transaktionsdatei sowie der Anforderung und des Empfangs des Autorisierungsdatensatzes, Übermittlung der Transaktionsdatei und des verknüpften Autorisierungsdatensatzes vom Nutzerendgerät an die drahtlos mit diesem verbundene Smartcard und des Empfangs der Korrektheit-Bestätigungsnachricht von dieser, Erzeugung einer finalen Transaktionsdatei im Nutzerendgerät aufgrund der Korrektheit-Bestätigungsnachricht und kartenseitig erzeugten Signatur zur Transaktionsdatei und Übermittlung der finalen Transaktionsdatei vom Nutzerendgerät an den Onlinebanking-Server,
wobei der Onlinebanking-Server zum Empfang der finalen Transaktionsdatei und Erzeugung und Aussendung einer Autorisierungs-Bestätigungsnachricht ausgebildet ist.

14. Anordnung nach Anspruch 10, wobei der Onlinebanking-Server Sendemittel zur verschlüsselten Ende-zu-Ende-Übersendung des angeforderten Autorisierungsdatensatzes an die Smartcard aufweist, wobei er das Nutzerendgerät als Empfangsstation der Nahbereichs-Datenübertragung und als Sendestation des Mobilfunknetzes oder WLAN nutzt,
und die Debit- oder Kreditkarte zur Entschlüsselung und Verarbeitung des Autorisierungsdatensatzes konfiguriert ist.

15. Anordnung nach Anspruch 10 oder 11, wobei die Mittel zur Nahbereichs-Datenübertragung gemäß dem Near Field Communication, NFC, Protokoll und dem EMV-Standard für chipbasierte Zahlungskarten konfiguriert sind, und eine dem Nutzerendgerät zugeordnete NFC-fähige Debit- oder Kreditkarte umfassen.

16. Anordnung nach einem der Ansprüche 10 bis 12, wobei das Nutzerendgerät einen Geräteschlüssel zur Authentifizierung mindestens gegenüber einem App-Ladesystem und gegenüber dem Onlinebanking-Server, insbesondere einen Private Key im Sinne einer Public Key Infrastructure, PKI, aufweist.

17. Anordnung nach einem der Ansprüche 10 bis 13, wobei das Nutzerendgerät einen Biometrie-Sensor zur Erfassung biometrischer Daten eines Nutzers, insbesondere einen Fingerabdrucksensor, aufweist, und die Mobile App zur Verarbeitung eines biometrischen Datensatzes vom Biometrie-Sensor ausgebildet ist.
